# EUROPEAN PATENT SPECIFICATION

(11) **EP 2 301 738 B1**
(45) Date of publication and mention of the grant of the patent: **04.07.2018**
(21) Application number: 09797862.1
(22) Date of filing: 09.07.2009
(51) Int. Cl.: B29C 47/06, B29K 21/00, B29L 9/00

(54) **FORMING DEVICE AND FORMING METHOD FOR RUBBER MEMBER**
VORRICHTUNG UND VERFAHREN ZUR FORMUNG EINES KAUTSCHUKELEMENTS
DISPOSITIF DE FORMAGE ET PROCÉDÉ DE FORMAGE D UN ÉLÉMENT EN CAOUTCHOUC

(30) Priority: 18.07.2008 JP 2008187003
(43) Date of publication of application: 30.03.2011
(73) Proprietor: Bridgestone Corporation, Tokyo 104-8340 (JP)
(72) Inventor: KIMURA, Shinichi, Kodaira-shi Tokyo 187-8531 (JP)
(74) Representative: Oxley, Robin John George
(86) International application number: PCT/JP2009/062523
(87) International publication number: WO 2010/007937

(56) References cited:
- EP-A2- 1 634 690
- JP-A- 2002 127 234
- JP-A- 2004 136 446
- JP-A- 2006 001 198
- US-A- 3 975 126
- US-A1- 2002 048 615
- US-A1- 2005 116 374

## Description

### Technical Field

The present invention relates to a forming apparatus and a forming method of rubber member which roll and then laminate rubber extruded by an extruder on a support to form a rubber member in a predetermined shape.

### Background Art

The rubber member or a pneumatic tire, for example, is composed of a plurality of tire constituent members such as carcass including cords, a tread, and a side wall which are rubber members, and an unvulcanized green tire is formed by combining them, and a tire is manufactured by vulcanizing and molding the green tire. Also, as a forming apparatus for such a green tire, a tire forming apparatus is known which winds and laminates an unvulcanized rubber strip or ribbon-shaped rubber around a support such as a core drum (rigid core) and a forming drum, to form a tire constituent member (laminated forming member) (See JP2006335022 A).

An apparatus that forms a rubber member by laminating a ribbon-shaped rubber, in general, continuously extrudes the ribbon-shaped rubber from an opening portion of a mouthpiece provided in an extruder, and forms the rubber into a sectional shape according to the opening shape and supplies it. Subsequently, the apparatus rolls and extends the rubber by a roller to form it into a thickness required when it is laminated on the support, and then overlaps and sticks a part of it on the outer face side of the support while winding the same and laminates it into a predetermined shape so as to form the rubber member. As described above, by further rolling the extruded rubber, adjustment of the thickness of the laminated ribbon-shaped rubber is made easier than a case in which the opening shape and the height of a mouthpiece opening portion are adjusted and also, shape forming of a ribbon-shaped rubber much thinner than the thickness that can be formed by extrusion from the mouthpiece opening portion is realized.

However, if the rubber is simply rolled or extended during this rolling, the ribbon-shaped rubber cannot be deformed appropriately, and excess or shortage might occur in the rubber near a side part in the width direction, for example, and fluctuation or undulation in the width direction or edge cut (edge breakage) in which an edge on the side portion is partially cut might occur in the rubber. With this, the fluctuation might occur in the thickness or width of the rolled rubber, and thus, when rubber is rolled and laminated, the above situation should be taken care of, and accuracy of rolling and forming of rubber needs to be improved.

### Prior-art References

### Patent Document

Attention is drawn to the disclosure of EP 1 634 690 A2, which disclose the preamble of claims 1 and 3. Publication No. 2006-335022

### Problems to be Solved by the Invention

The present invention has been made in view of the above problems and has an object to prevent occurrence of fluctuation, undulation or edge cut in the width direction of rolled rubber when the rubber extruded from a mouthpiece is rolled and then, laminated so as to form a rubber member, and to improve accuracy of rolling and forming of rubber.

### Means for Solving the Problems

The present invention is a forming apparatus of a rubber member, comprising: an extruder that extrudes rubber from an opening portion of a mouthpiece; rolling means that rolls and extends the extruded rubber; and laminating means that laminates the rolled rubber on a support to form a rubber member, wherein the opening portion of the mouthpiece has an opening shape that is formed having the same opening width as a width of the rolled rubber and extrudes the rubber having a thickness obtained by multiplying the thickness of the rolled rubber by an extension ratio of the rubber in the rolling.

Also, the present invention is a forming method of a rubber member for rolling and laminating extruded rubber on a support to form a rubber member, the method comprising the steps of: extruding the rubber through an opening portion of a mouthpiece having an opening shape that is formed having the same opening width as the width of the rolled rubber and having a thickness obtained by multiplying the thickness of the rolled rubber by an extrusion ratio of the rubber in the rolling; rolling and extending the extruded rubber while maintaining the width thereof; and laminating the rolled rubber on the support to form the rubber member.

### Advantages of the Invention

According to the present invention, when rubber extruded from a mouthpiece is rolled and then, laminated so as to form a rubber member, occurrence of fluctuation or undulation in the width direction or edge cut of the rolled rubber can be prevented, and accuracy of rolling and forming of rubber can be improved.

### Brief Description of the Drawings

Fig. 1 is a schematic diagram illustrating an outline configuration of a tire forming apparatus of this embodiment. Figs. 2A and 2B are diagrams schematically illustrating each of cross sectional shapes of a ribbon-shaped rubber before and after rolling of this embodiment.

Fig. 3 is a flowchart illustrating a forming procedure of a rubber member by the tire forming apparatus of this embodiment.

Figs. 4A to 4C are schematic diagrams for explaining undulation and edge cut of the ribbon-shaped rubber. Description of Embodiments

An embodiment of the present invention will be described below referring to the attached drawings.

A forming apparatus of a rubber member of this embodiment is an apparatus that forms (manufactures) a rubber member by rolling rubber (lengthy extruded rubber) in the shape of a ribbon, a strip, a band or the like extruded by an extruder and by laminating it on a support. Here, similarly to the above-described prior-art tire forming apparatus, a tire forming apparatus that forms a green tire by sticking and laminating the ribbon-shaped rubber on the support so as to form a tire constituent member (such as a tread and a side wall), which is a rubber member, will be described as an example.

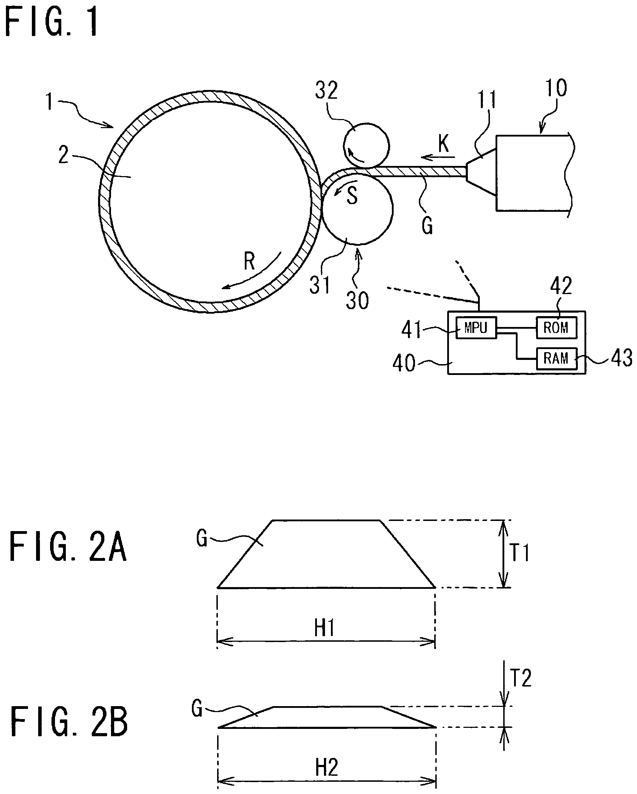

Fig. 1 is a schematic diagram illustrating an outline configuration of the tire forming apparatus of this embodiment, and an essential part thereof is illustrated in a side view or a block diagram.

A tire forming apparatus 1 includes, as shown in the figure, a support 2 rotatable around an axis, an extruder 10 (only the distal end portion side is shown in the figure), which is supply means of a ribbon-shaped rubber G, a roller head 30 arranged between them, and a controller 40 that controls the entire apparatus.

The support 2 is means that supports the ribbon-shaped rubber G to be laminated and a tire constituent member when a green tire is formed, and is a rigid core having the outer face shape according to the inner face shape of a green tire to be formed, a forming drum or a core body used in a forming step of a green tire or a green tire in the middle of the forming step, composed of tire constituent members arranged therein, for example. Here, a rigid core is used as the support 2, and on an outer face of a green tire (intermediate formed body) in the middle of the forming step arranged on the outer face side thereof, the ribbon-shaped rubber G is stuck and laminated. Also, the tire forming apparatus 1 includes rotation driving means (not shown) composed of a motor and a transmission mechanism that transmits its rotation power to the support 2 (such as a plurality of meshed gears or a transmission belt and a pulley, for example) and the like, and the support 2 is rotated and driven by that around the axis at a predetermined speed (an arrow R in the figure) so as to wind and laminate the ribbon-shaped rubber G on the outer face (lower layer member).

The extruder 10 has a mouthpiece 11 attached to a rubber outlet, sequentially extrudes heated/kneaded unvulcanized rubber from an opening portion of the mouthpiece 11, forms the ribbon-shaped rubber G in a predetermined sectional shape according to the opening shape and continuously supplies it to the roller head 30 at a predetermined speed (an arrow K in the figure) . Also, the extruder 10 has means (not shown) that moves along the outer face of the support 2 in the axial direction along with the roller head 30 and moves by that according to a supply speed of the ribbon-shaped rubber G , a rotation speed of the support 2, or a lamination speed of the ribbon-shaped rubber G onto the support 2 and the like and supplies and laminates the ribbon-shaped rubber G at a predetermined position on the rotating support 2.

The roller head 30 is rolling means that extends the ribbon-shaped rubber G extruded by the extruder 10 at a predetermined extension ratio while rolling and forming it into the predetermined sectional shape. The roller head 30 has a pair of rollers 31 and 32 supported rotatably around the axis and rotation driving means (not shown) thereof. Each of the rollers 31 and 32 of this roller head 30 has a substantially cylindrical or disk shape having an outer peripheral shape according to the rolled shape of the ribbon-shaped rubber G, and the lower roller 31 having a larger diameter is arranged opposite to the vicinity of the outer face of the support 2. On the other hand, the upper roller 32 having a smaller diameter is arranged above the lower roller 31 opposite to each other with a predetermined gap according to the rolled thickness of the ribbon-shaped rubber G between the outer peripheral faces thereof. The rollers 31 and 32 are supported in a state in which the axes are made substantially parallel with each other, and the ribbon-shaped rubber G extruded from the mouthpiece 11 is led and continuously supplied to the rubber inlet side of one side (right side in the figure) between them, and is passed between the rollers 31 and 32 to be rolled and deformed.

Also, in this tire forming apparatus 1, the roller head 30 is also laminating means that rolls the ribbon-shaped rubber G with the rollers 31 and 32, sticks and laminates the rolled ribbon-shaped rubber G on the rotating support 2 and forms the rubber member in the predetermined shape. That is, the roller head 30 is driven by the rotation driving means, rotates the rollers 31 and 32 in directions opposite to each other in synchronization (an arrow S in the figure) . The roller head 30 rolls the ribbon-shaped rubber G from the mouthpiece 11 between the rollers 31 and 32, and forms the ribbon-shaped rubber G into a sectional shape and a thickness according to the outer peripheral face shape, the interval and the like of the rollers 31 and 32. Subsequently, the roller head 30 moves the ribbon-shaped rubber G having passed between the rollers 31 and 32 while holding it by the rotating lower roller 31 to a position to stick on the support 2 and presses and fixes it on the outer face of the support 2 rotating in conjunction. As described above, the roller head 30 sticks the ribbon-shaped rubber G to the outer face of the support 2, the lower-layer ribbon shaped rubber G, the arranged tire constituent member, or the like, continuously winds and laminates it spirally and forms a rubber member such as a tread in the predetermined shape.

At that time, in this tire forming apparatus 1, rotation circumferential speeds (rolling/sticking speeds) of the rollers 31 and 32 are relatively increased with respect to an extrusion (supply) speed of the rubber from the mouthpiece 11 so as to give a predetermined speed difference. This speed difference is set in accordance with a difference in a sectional area before and after the rolling of the ribbon-shaped rubber G, an extension ratio and the like so that any excess or shortage is not caused in a supply amount and a stuck amount while the ribbon-shaped rubber G is extended and formed into a desired rolled shape. As a result, the tire forming apparatus 1 rolls and extends the ribbon-shaped rubber G as if pulling it by the rollers 31 and 32 while a tension is applied to the supplied ribbon-shaped rubber G and forms the thickness and the sectional area of the ribbon-shaped rubber G after the rolling smaller than those before the rolling.

Figs. 2A and 2B are diagrams schematically illustrating each of cross sectional shapes of the ribbon-shaped rubber G before and after rolling of this embodiment. Fig. 2A illustrates a sectional shape before the rolling immediately after the rubber is extruded from the mouthpiece 11, and the opening portion of the mouthpiece 11 is also formed into substantially the same shape. On the other hand, Fig. 2B illustrates a sectional shape after the rolling by the roller head 30 and shows a sectional shape of the final ribbon-shaped rubber G required when stuck onto the support 2 (hereinafter referred to as a required ribbon shape).

The ribbon-shaped rubber G before and after the rolling has, as shown in the figure, a substantially trapezoidal shape whose side parts on the both sides in the width direction (lateral direction in the figure) become gradually thinner and are formed having predetermined widths H1 and H2 and predetermined thicknesses T1 and T2. However, this ribbon-shaped rubber G is rolled in a condition where the thickness T2 after the rolling thinner than the thickness T1 before the rolling and the widths H1 and H2 maintain substantially the same width, and the sectional shape is changed in the thickness direction (vertical direction in the figure) before and after the rolling.

Here, the sectional shape or dimension of the ribbon-shaped rubber G after the rolling is determined by the shape or condition of the extrusion or conditions of rolling or extension and the like, and by setting them as appropriate, rolling while the widths H1 and H2 of the ribbon-shaped rubber G are maintained at predetermined values is made possible. Particularly, in this embodiment, the shape of the opening portion (opening shape) of the mouthpiece 11 specifying the extrusion sectional shape of the ribbon-shaped rubber G is formed in accordance with the mode of the rolling deformation of the ribbon-shaped rubber G and the opening width of the mouthpiece 11 is designed in accordance with the width H2 of the required ribbon shape and the like, and the ribbon-shaped rubber G is rolled substantially without changing the widths H1 and H2.

Specifically, in this tire forming apparatus 1, the opening portion of the mouthpiece 11 (See Fig. 2A) has the opening shape that is formed with the same opening width as the width (rolling width) H2 of the rolled ribbon-shaped rubber G to be rolled by the roller head 30 and extrudes the ribbon-shaped rubber G having the predetermined sectional shape in which mainly the thickness is changed during extension by rolling. As a result, the ribbon-shaped rubber G with the width H1, which is the same as the width H2 of the required ribbon shape, is extruded from the opening portion of the mouthpiece 11, rolled by the roller head 30 while the width is maintained, and the thickness thereof is changed from T1 to T2 between the both rollers 31 and 32 so that the ribbon-shaped rubber G is extended in the longitudinal direction. Also, here, the opening portion of the mouthpiece 11 is formed so as to have the opening shape to extrude the ribbon-shaped rubber G having the thickness obtained by multiplying the thickness (rolling thickness) T2 of the ribbon-shaped rubber G after the rolling by the roller head 30 by an extension ratio R (T2 × R), considering the extension ratio R of the ribbon-shaped rubber G during this rolling. In addition, in this mouthpiece 11, the opening height of the opening portion corresponding to the thickness of the ribbon-shaped rubber G is formed having the thickness (T2 × R) obtained by the above multiplication excluding inclined both side parts, and the width between protruding ends of the both side parts is formed having the same width as the rolling width H2 of the ribbon-shaped rubber G, in accordance with the sectional shape of the ribbon-shaped rubber G.

Subsequently, a setting method and a procedure of the opening portion of this mouthpiece 11 will be described using an example of rolling and forming the ribbon-shaped rubber G having the required ribbon shape (See Fig. 2B) with the thickness T2 of 0.55 mm and the width H2 of 20 mm. First, from the thickness (gauge) of the set required ribbon shape, an interval (gap) between the rollers 31 and 32 of the roller head 30 is determined. At this time, this gap is determined such that it is smaller than the thickness T2 of the required ribbon shape only by a predetermined amount according to swell or 0.5 mm, for example, considering the swell of the rolled rubber. Also, the opening width of the mouthpiece 11 is determined from the width of the required ribbon shape, and here, the opening width of the mouthpiece 11 is determined at 20 mm, which is the same as the width H2 of the required ribbon shape.

Subsequently, from physical characteristics of the rubber constituting the ribbon-shaped rubber G, the extension ratio R in rolling by the roller head 30 is determined, and the opening height (gauge) of the mouthpiece 11 is determined from the extension ratio R. Specifically, from the result of the physical characteristic research, for example, if the rubber can be extended to 2.5 times (250%) and is to be extended by that extension ratio R, the thickness T2 (0.5) of the required ribbon shape is multiplied by the extension ratio R (2.5), and the opening height of the mouthpiece 11 is determined at 1.4 mm (≈ 0.55 × 2.5). As described above, the size of the opening portion of the mouthpiece 11 is determined, the opening portion of the mouthpiece 11 is formed into this opening shape. The ribbon-shaped rubber G is extruded so as to have the thickness T1 of 1.4 mm and the width H1 of 20 mm, and the extrusion of the ribbon-shaped rubber G is evaluated.

The tire forming apparatus 1 extrudes the ribbon-shaped rubber G using the mouthpiece 11 formed as above, performs rolling while the width is maintained substantially the same and performs winding and laminating on the support 2 and forms a rubber member such as a tread on the support 2. Thus, the tire forming apparatus 1 includes, in addition to the above, for example, means that operates the extruder 10 and the roller head 30 in conjunction while moving them along the outer face of the support 2 in the axial direction in accordance with the type and sectional shape of the rubber member to be formed, and other means (not shown) that forms the rubber member such as a roller that presses and stitches the ribbon-shaped rubber G and the like. Also, the tire forming apparatus 1 connects each part in the apparatus to the controller 40 (See Fig. 1) and controls the entire apparatus by the controller 40 so as to perform each operation relating to tire forming including extrusion and rolling of the ribbon-shaped rubber G and forming of the rubber member.

The controller 40 is composed of a computer provided with a microprocessor (MPU) 41, a ROM (Read Only Memory) 42 that stores various programs, a RAM (Random Access Memory) 43 that temporarily stores data and the like and is connected to each part in the apparatus through an interface. As a result, the controller 40 transmits/receives various types of data including a control signal to/from each part in the apparatus and controls and adjusts the extrusion speed of the ribbon-shaped rubber G by the extruder 10 and the rolling speed by the roller head 30, for example, and extends and deforms the ribbon-shaped rubber G by a predetermined extension ratio R while maintaining the width thereof as described above. Also, the controller 40 operates the entire apparatus at timing and under a condition set in advance in association with each other and executes a forming procedure and an operation (step) of the rubber member, which will be described below on the basis of a predetermined program.

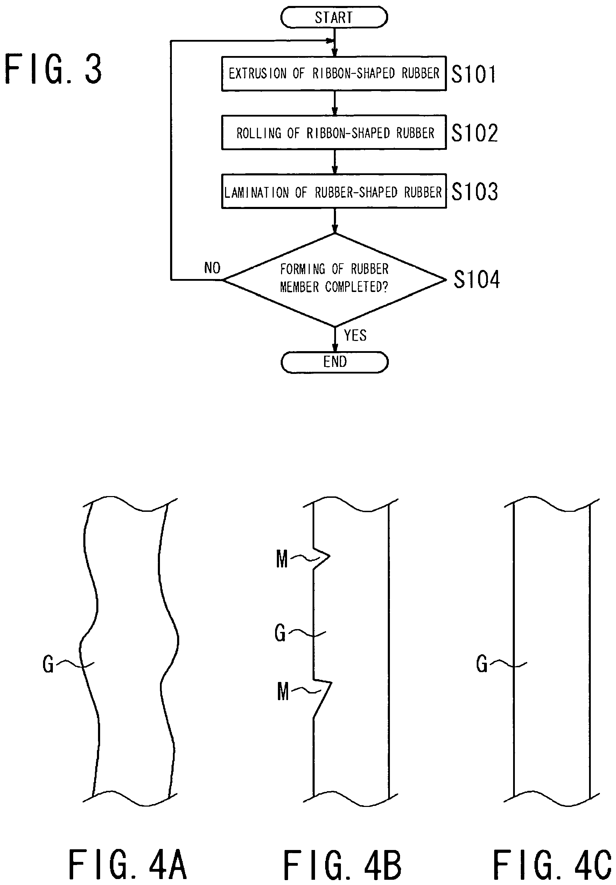

Fig. 3 is a flowchart illustrating the forming procedure of the rubber member by this tire forming apparatus 1.

The tire forming apparatus 1, as shown in the figure, first, operates the extruder 10 and extrudes the ribbon-shaped rubber G having the width H1 according to the rolling width H2 of the ribbon-shaped rubber G by the roller head 30 from the opening portion of the mouthpiece 11 (S101). Also, this extruded ribbon-shaped rubber G is rolled by the roller head 30 while its width is maintained (S102) and is extended mainly by changing its thickness. At that time, here, the ribbon-shaped rubber G having the thickness T1 obtained by multiplying the thickness T2 of the ribbon-shaped rubber G after the rolling by the extension ratio R of the ribbon-shaped rubber G in the rolling (T2 × R), and the ribbon-shaped rubber G having the same width H1 as the rolling width H2 of the ribbon-shaped rubber G is extruded and rolled.

Subsequently, the ribbon-shaped rubber G having been rolled and extended is wound around and stuck to the support 2 by the lower roller 31 of the roller head 30, laminated by one layer or plural layers (S103), and each of the operations is repeatedly performed until the forming of the rubber member is completed (S104, NO). As described above, the tire forming apparatus 1 rolls and extends the ribbon-shaped rubber G extruded from the opening portion of the mouthpiece 11 and then, laminates it on the support 2, completes the forming of the rubber member (S104, YES) and finishes the forming operation. After that, the tire forming apparatus 1 sequentially forms each tire constituent member such as a tread and a side wall, which is a rubber member, on the support 2 by the same procedure as above arid forms a green tire by combining the other tire constituent members or the like. Also, the green tire after the forming is contained in a die in a vulcanizing apparatus and vulcanized and molded, and a product tire is manufactured through the other post steps.

As described above, in this embodiment, the opening portion of the mouthpiece 11 is formed into the opening shape that has the same opening width as the rolling width H2 of the ribbon-shaped rubber G and extrudes the ribbon-shaped rubber G having the thickness obtained by multiplying the thickness T2 of the ribbon-shaped rubber G after the rolling by the extension ratio R in the rolling (hereinafter referred to as multiplied thickness (T2 × R)). That is, the opening width of the mouthpiece 11 is set in accordance with the width H2 of the required ribbon shape, and the ribbon-shaped rubber G having substantially the same width H1 as the rolling width H2 is extruded from the opening portion of this mouthpiece 11 and rolled by the roller head 30 while the width is maintained, and the ribbon-shaped rubber G is extended by changing the thickness.

As described above, since the sectional shape of the ribbon-shaped rubber G is changed substantially only in the thickness direction during rolling and extending, occurrence of fluctuation in the width direction and excess or shortage of the rubber near the side part and the like can be suppressed, and by rolling and deforming the ribbon-shaped rubber G as appropriate so that occurrence of undulation or edge cut can be prevented. Also, since the forming is performed while thickness T1 of the ribbon-shaped rubber G during extrusion is set in accordance with the extension ratio R in advance, the ribbon-shaped rubber G can be accurately rolled and extended, whereby accuracy of the sectional shape and the thickness T2 after the rolling can be improved, and occurrence of undulation and edge cut can be further suppressed.

Figs. 4A to 4C are schematic diagrams for explaining the undulation or edge cut of this ribbon-shaped rubber G, and a part of the ribbon-shaped rubber G in the longitudinal direction is illustrated in plan views, respectively.

In the ribbon-shaped rubber G, for example, when the width H2 after the rolling (See Fig. 2) is larger than the width H1 before the rolling (H2 > H1) or when the thickness T1 of the ribbon-shaped rubber G before the rolling is larger than the multiplied thickness (T2 × R) (T1 > T2 × R), fluctuation of the ribbon-shaped rubber G in the width direction during rolling is increased or the like, and undulation (See Fig. 4A) tends to occur easily. On the contrary to this, for example, when the width H2 after the rolling is smaller than the width H1 before the rolling (H2 < H1) or when the thickness T1 of the ribbon-shaped rubber G before the rolling is smaller than the multiplied thickness (T2 × R) (T1 < T2 × R), rubber on the side part of the ribbon-shaped rubber G in the width direction runs short during the rolling or a tension acts on the same portion and the like, whereby an edge cut M (See Fig. 4B) tends to occur easily.

Against the above situations, by rolling the ribbon-shaped rubber G while maintaining the width and by changing the sectional shape mainly in the thickness direction as in this tire forming apparatus 1, fluctuation of the ribbon-shaped rubber G in the width direction in the rolling is suppressed (See Fig. 4C), and the rubber can be rolled appropriately and reasonably. Therefore, according to this embodiment, when the ribbon-shaped rubber G extruded from the mouthpiece 11 is rolled and laminated so as to form the rubber member, occurrence of fluctuation and undulation in the width direction, or edge cut of the rolled ribbon-shaped rubber G can be prevented, and accuracy of the rolling and forming of the ribbon-shaped rubber G can be improved. With this, fluctuation in the sectional shape of the rolled ribbon-shaped rubber G can be suppressed and maintained substantially constant, the rubber member, which is a laminated body thereof, can be accurately formed, and shape accuracy can be also improved. Also, since the thickness T1 of the ribbon-shaped rubber G before the rolling is formed considering the extension ratio R in the rolling, a greater effect can be obtained for suppression of the undulation and edge cut.

Here, if the opening width of the opening portion of the mouthpiece 11 is formed having the same width as the rolling width H2 of the ribbon-shaped rubber G by the roller head 30, and the ribbon-shaped rubber G having the same width as the rolling width H2 is extruded, a change in the width of the ribbon-shaped rubber G in the rolling can be eliminated, and fluctuation in the width direction can be suppressed more reliably. However, even if the width of the ribbon-shaped rubber G is changed to some degree in the rolling, by rolling and extending the rubber such that the thickness is mainly changed, an effect can be obtained that the fluctuation and undulation in the width direction or edge cut and the like are sufficiently suppressed. Thus, the rolling width H2 of the ribbon-shaped rubber G may be set at a width within a predetermined allowable range (approximately ± 1.0 mm of the opening width of the mouthpiece 11, for example) according to the width or the extension ratio R in the rolling and the like with respect to the opening width of the mouthpiece 11. Therefore, in the present invention, the same opening width as the width of the rubber after the rolling or to roll and extend the rubber while maintaining the width includes the width in the allowable range by which the same effect can be obtained in addition to the same width, respectively. The same applies to the relationship between the thicknesses of the ribbon-shaped rubber G before and after the rolling, and the rubber of the above-described multiplied thickness (T2 × R) includes rubber formed having the thickness within the predetermined allowable range.

On the other hand, in this tire forming apparatus 1, the rolling means and the laminating means of the ribbon-shaped rubber G are realized by one configuration by performing the rolling and laminating of the ribbon-shaped rubber G by the roller head 30, but they may be separated into different configurations. In this case, a pair of lamination rollers that wind and laminate the ribbon-shaped rubber G on the support 2 are provided between the roller head 30 and the support 2, for example, and the ribbon-shaped rubber G rolled by the rollers 31 and 32 of the roller head 30 is laminated on the support 2 by the lamination roller so as to form the rubber member.

In this embodiment, the tire constituent member (rubber member) is formed by laminating the ribbon-shaped rubber G, but this tire constituent member may be formed by directly laminating the ribbon-shaped rubber G on a rigid core, a forming drum or other tire constituent members wound around them. Alternatively, it may be so configured that after the ribbon-shaped rubber G is formed in the predetermined shape by laminating it on the outer face of the forming drum and the like, it is removed therefrom and stuck on the outer surface of the tire constituent member or the like on the rigid core or another forming drum.

Also, the tire forming apparatus 1 that forms a green tire has been described here as an example, but the present invention can be also applied to a forming apparatus (method) of other rubber members formed by laminating the ribbon-shaped rubber G on the support 2. Therefore, the support 2 on which the ribbon-shaped rubber G is laminated includes, other than the above-described rigid core and the forming drum, other supports used for forming the respective rubber members and on which the ribbon-shaped rubber G is laminated such as a base tire in a retreaded tire, another drum on which the ribbon-shaped rubber G is laminated or another rubber member formed on the drum (rubber member in the middle of forming) and the like, for example. Moreover, the ribbon-shaped rubber G may be formed, for example, in the shape other than the substantially trapezoidal section such as a substantially rectangular section, a triangle, a curved shape and the like in accordance with the forming of the respective rubber members.

### (Rubber extrusion/rolling test)

In order to confirm the effects of the present invention, the opening portion of the mouthpiece 11 was actually formed as described above, the extruder 10 and the tire forming apparatus 1 are operated, and extrusion and rolling of the ribbon-shaped rubber G were performed. As a result, it turned out that occurrence of fluctuation and undulation of the ribbon-shaped rubber G after the rolling in the width direction or edge cut on the side part can be suppressed. Explanation of Reference Numerals

1 tire forming apparatus
2 support
10 extruder
11 mouthpiece
30 roller head
31 lower roller
32 upper roller
40 controller
41 MPU
42 ROM
43 RAM
G ribbon-shaped rubber

## Claims

1. A forming apparatus (1) of a rubber member (G), comprising:
an extruder (10) that extrudes rubber from an opening portion of a mouthpiece (11);
rolling means (30) that rolls and extends the extruded rubber; and
laminating means (30) that laminates the rolled rubber on a support (2) to form a rubber member, **characterised in that** the opening portion of the mouthpiece (11) has an opening shape that is formed having the same opening width (H1) as the width (H2) of the rolled rubber and extrudes the rubber having a thickness (T1) obtained by multiplying the thickness (T2) of the rolled rubber by an extension ratio of the rubber in the rolling.

2. The forming apparatus of a rubber member according to claim 1, wherein the rolling means is a roller head (30) that rolls the rubber by rollers (31, 32).

3. A forming method of a rubber member (G) for rolling and laminating extruded rubber on a support to form a rubber member, the method comprising the steps of:
extruding the rubber;
rolling and extending the extruded rubber while maintaining a width thereof; and
laminating the rolled rubber on the support to form the rubber member, **characterised in that** the rubber is extruded through an opening portion of a mouthpiece (11) having an opening shape that is formed having the same opening width (H1) as the width (H2) of the rolled rubber and having a thickness (T2) obtained by multiplying the thickness (T2) of the rolled rubber by an extension ratio of the rubber in the rolling.

## Patentansprüche

1. Vorrichtung zur Formung (1) eines Kautschukelements (G), umfassend:
einen Extruder (10), der Kautschuk aus einem Öffnungsabschnitt eines Mundstücks (11) extrudiert;
ein Walzmittel (30), das den extrudierten Kautschuk walzt und ausdehnt; und
ein Laminiermittel (30), das den gewalzten Kautschuk auf einen Träger (2) unter Bildung eines Kautschukelements laminiert, **dadurch gekennzeichnet, dass** der Öffnungsabschnitt des Mundstücks (11) eine Öffnungsgestalt aufweist, die so geformt ist, dass sie dieselbe Öffnungsbreite (H1) wie die Breite (H2) des gewalzten Kautschuks aufweist und den Kautschuk extrudiert, der eine Dicke (T1) aufweist, die durch Multiplizieren der Dicke (T2) des gewalzten Kautschuks mit einem Ausdehnungsverhältnis des Kautschuks beim Walzen erhalten wird.

2. Vorrichtung zur Formung eines Kautschukelements nach Anspruch 1, wobei
das Walzmittel ein Walzenkopf (30) ist, der den Kautschuk durch Walzen (31,32) walzt.

3. Verfahren zur Formung eines Kautschukelements (G) zum Walzen und Laminieren von extrudiertem Kautschuk auf einem Träger, um ein Kautschukelement zu bilden, wobei das Verfahren die Schritte umfasst des
Extrudierens des Kautschuks;
Walzens und Ausbreitens des extrudierten Kautschuks, während eine Breite davon beibehalten wird; und
Laminierens des gewalzten Kautschuks auf den Träger, um das Kautschukelement zu formen, **dadurch gekennzeichnet, dass** der Kautschuk durch einen Öffnungsabschnitt eines Mundstücks (11) extrudiert wird, das eine Öffnungsgestalt aufweist, die so geformt ist, dass sie dieselbe Öffnungsbreite (H1) wie die Breite (H2) des gewalzten Kautschuks aufweist und eine Dicke (T2) aufweist, die durch Multiplizieren der Dicke (T2) des gewalzten Kautschuks mit einem Ausdehnungsverhältnis des Kautschuks beim Walzen erhalten wird.

## Revendications

1. Appareil de mise en forme (1) d'un élément en caoutchouc (G), comprenant:
une extrudeuse (10) qui extrude le caoutchouc depuis une partie d'ouverture d'un embout buccal (11);
un moyen de roulage (30) qui roule et étend le caoutchouc extrudé; et
un moyen de stratification (30) qui stratifie le caoutchouc roulé sur un support (2) afin de former un élément en caoutchouc, **caractérisé en ce que** la partie d'ouverture de l'embout buccal (11) présente une forme d'ouverture qui est formée présentant la même largeur d'ouverture (H1) que la largeur (H2) du caoutchouc roulé et extrude le caoutchouc présentant une épaisseur (T1) obtenue par multiplication de l'épaisseur (T2) du caoutchouc roulé selon un rapport d'extension du caoutchouc dans le roulage.

2. Appareil de mise en forme d'un élément en caoutchouc selon la revendication 1, dans lequel
le moyen de roulage est une tête de rouleau (30) qui roule le caoutchouc par l'intermédiaire de rouleaux (31, 32).

3. Procédé de mise en forme d'un élément en caoutchouc (G) pour le roulage et la stratification de caoutchouc extrudé sur un support afin de former un élément en caoutchouc, le procédé comprenant les étapes de:
extrusion du caoutchouc;
roulage et extension du caoutchouc extrudé tout en conservant sa largeur; et
stratification du caoutchouc roulé sur le support afin de former l'élément en caoutchouc, **caractérisé en ce que** le caoutchouc est extrudé à travers une partie d'ouverture d'un embout buccal (11) présentant une forme d'ouverture qui est formée en présentant la même largeur d'ouverture (H1) que la largeur (H2) du caoutchouc roulé et présentant une épaisseur (T2) obtenue en multipliant l'épaisseur (T2) du caoutchouc roulé selon un rapport d'extension du caoutchouc dans le roulage.
